(19) Europäisches Patentamt
European Patent Office
Office européen des brevets

(11) Publication number : **0 339 677 B1**

# (12) EUROPEAN PATENT SPECIFICATION

(45) Date of publication of patent specification : **11.11.92 Bulletin 92/46**

(51) Int. Cl.$^5$ : **B05D 1/20,** G02F 1/35, H01B 1/12

(21) Application number : **89107790.1**

(22) Date of filing : **28.04.89**

## (54) Process for producing polyacetylene or polyacene type super long conjugated polymers.

(30) Priority : **28.04.88 JP 106309/88**
**28.04.88 JP 106310/88**

(43) Date of publication of application : **02.11.89 Bulletin 89/44**

(45) Publication of the grant of the patent : **11.11.92 Bulletin 92/46**

(84) Designated Contracting States : **DE FR GB**

(56) References cited : **DE-A- 3 625 009**

(56) References cited :
**MACROMOLECULES, vol. 18, May 1985, pages 841-845, American Chemical Society; T. MASUDA et al.: "Polymerization of1-(trimethylsilyl)-1-propyne by halides of niobium(V) and tantalum(V) and polymer properties"**
**THIN SOLID FILMS, vol. 99, no. 1/2/3, 14th January 1983, pages 317-321, Elsevier Sequoia, Lausanne, CH; A. BARRAUD:"Polymerization in langmuir-blodgett films and resist applications"**

(73) Proprietor : **MATSUSHITA ELECTRIC INDUSTRIAL CO., LTD.**
**1006, Oaza Kadoma**
**Kadoma-shi, Osaka-fu, 571 (JP)**

(72) Inventor : **Ogawa, Kazufumi**
**30-5 Higashinakaburi 1-chome**
**Hirakata-shi (JP)**

(74) Representative : **Patentanwälte Leinweber & Zimmermann**
**Rosental 7/II Aufg.**
**W-8000 München 2 (DE)**

EP 0 339 677 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

This invention relates to an electric material, and more particularly to an organic substance having a polyacetylenic bond and exhibiting electrical conductivity and nonlinear optical effect.

Since the polymers of acetylene derivatives involve a one-dimensional backbone having a pai electron conjugated system in their molecule, they exhibit electrical conductivity and nonlinear optical effect. Thus, they are widely studied as a light- or electron-functional material.

In this connection, as the production process of a polyacetylene, the polymerization process reported by Shirakawa et al. using Ziegler-Natta catalyst is well known.

However, polyacetylene derivatives known today are unstable to the action of heat, pressure or ultraviolet ray in oxygen-containing atmospheres. Thus, method for stabilization is being studied.

However, no method for stabilizing acetylene derivative polymers has been found.

It is known that, using a reagent having a straight hydrocarbon chain and a -Si-Cl group on one molecular end, a monomolecular film can be formed on the surface of a hydrophilic substrate by chemical adsorption in a non-aqueous organic solvent. It is also known that building-up the monomolecular films can be realized by the chemical adsorption method followed after irradiating the surface of the monomolecular film with a high energy beam in an oxygen-containing gas to make the hydrophilic film surface.

Accordingly, when a substance involving an acetylenic group in a part of the straight hydrocarbon chain is subjected to chemical adsorption, a monomolecular film of the acetylene derivative having a thickness of several tens angstrom order can be formed, and a cumulative film made of many monomolecular layers can also be obtained easily.

The present inventor has discovered that, when this prepared monomolecular film is dipped in an organic solvent containing a metal halide catalyst and the acetylenic group part of the monomolecular film is polymerized, a super high molecular weight polyacetylene having a very long conjugated bond and stable even in an oxygen-containing atmosphere can be obtained. That is, it has been found that a super high molecular weight straight chain polymer having a continuous long conjugated bond (super long conjugated polymer) can be prepared by polymerizing the acetylene derivative molecules by the use of a metallic catalyst while maintaining the constant orientation of the molecules.

Thus, by dipping a substrate having a hydrophilic surface into a solution of a substance having an acetylenic group and chlorosilanyl group (-SiCl) dissolved in a nonaqueous organic solvent, and chemically adsorbing the substance having an acetylenic group and chlorosilanyl group onto the surface of the substrate, a monomolecular film of the substance having an acetylenic group and chlorosilanyl group can be prepared on the substrate in the state where the molecules are well aligned. Further, by polymerizing the chemically adsorbed film of the acetylene derivative formed on the specified substrate by the use of a metallic catalyst, a straight chain polyacetylene having a super high molecular weight and having a continuous conjugated bond can be produced while retaining the molecular orientation at the time of polymerization. For the polymerization reaction, a metal halide catalyst such as $MoCl_5$, $WCl_6$, $NbCl_5$, $TaCl_5$, $Mo(CO)_5$, $W(CO)_6$, $Nb(CO)_5$, $Ta(CO)_5$ or the like can be used. As the organic solvent, toluene, dioxane, anisole or the like can be used.

On the other hand, it is well known that a monomolecular film can be prepared on water surface if an oleo-hydro-philic acetylene derivative having both a hydrophobic group and a hydrophilic group is used, and that a built-up film can be formed by the Langmuir-Blodgett method (LB method).

LB method has been considered to be hopeful as a means for constructing molecular devices in the recent developmental studies of molecular devices in which a molecule itself has a function. According to LB method, a monomolecular film of an acetylene derivative having a thickness of several tens angstrom order can be prepared, and its cumulative film can also be prepared easily.

According to this invention, an acetylenic group-containing substance dissolved in an organic solvent is spread on water surface and the organic solvent is vaporized off, after which the molecules of the acetylenic group-containing substance remaining on the water surface are gathered with a barrier in the direction of water surface. Then, while applying a necessary surface pressure, a substrate is moved up and down to build-up the monomolecular film of the acetylene derivative on the substrate (this building-up method is called "Langmuir-Blodgett (LB) method, and the built-up monomolecular film prepared by this method is called "LB film"). Then, the substrate on which the built-up film is deposited, is dipped in an organic solvent containing a metal halide catalyst and the acetylenic group part of the monomolecular film is polymerized, whereby a polyacetylene type super long conjugated polymer having a super high molecular weight and a very long conjugated bond and stable even in an oxygen-containing atmosphere is formed. That is, by polymerizing acetylene derivative molecules by the use of a metallic catalyst while retaining a constant orientation, a straight chain polymer having a super high molecular weight and a continuous conjugated bond (super long conjugated polymer) is obtained.

Further, if a direct current bias is applied in the direction of surface at the time of building-up said LB

film, a super long conjugated polymer having a longer conjugated bond is obtained.

That is, by building-up LB film of an acetylene derivative on a specific substrate under a specified surface pressure and polymerizing the resulting built-up film with a metallic catalyst, a straight chain polyacetylene having a super high molecular weight and a continuous conjugated bond and retaining the same molecular orientation as that at the time of polymerization can be prepared.

Further, if a direct current bias is applied in the surface direction when the acetylene derivative molecules are gathered in the surface direction by a barrier on the water surface, orientation of the monomer molecules at the time of building-up is furthermore improved and a polyacetylene type super long conjugated polymer having a longer conjugated bond can be produced.

Figure 1(a) is an enlarged sectional conceptional view, in molecular order, of a substrate on which one layer of NTS (ω-nonadecylynoic trichlorosilane) adsorbed film is formed; Figure 1(b) is an enlarged sectional conceptional view, in molecular order, of a substrate on which a trans-polyacetylene has been formed by polymerization; Figure 2(a) is an enlarged sectional conceptional view, in molecular order, of a substrate on which one layer of TMS-NTS {1-(trimethylsilyl)-ω-nonadecylynoic trichlorosilane} adsorbed film is formed; Figure 2(b) is an enlarged sectional conceptional view, in molecular order, of a substrate on which a trans-polyacetylene has been formed by polymerization; Figure 3(a) is an enlarged sectional conceptional view, in molecular order, of a substrate on which one layer of NTS film is formed; Figure 3(b) is an enlarged sectional conceptional view, in molecular order, of a substrate on which a cis-polyacetylene has been formed by polymerization; Figure 4(a) is an enlarged sectional conceptional view, in molecular order, of a substrate on which one layer of TMS-NTS adsorbed film is formed; Figure 4(b) is an enlarged sectional conceptional view, in molecular order, of a substrate on which a cis-polyacetylene has been formed by polymerization; and Figures 5(a) to 5(e) are conceptional diagrams of molecular order illustrating a process for producing a polyacene type super long conjugated polymer.

Figure 6(a) is an enlarged sectional conceptional view, in molecular order, of a substrate on which one layer of TCA (ω-tricosynoic acid) LB film is formed; Figure 6(b) is an enlarged sectional conceptional view, in molecular order, of a substrate on which a trans-polyacetylene has been formed by polymerization; Figure 7(a) is an enlarged sectional conceptional view, in molecular order, of a substrate on which one layer of 1-(trimethylsilyl)-1-tricosynoic acid LB film is formed; Figure 7(b) is an enlarged sectional conceptional view, in molecular order, of a substrate on which a transpolyacetylene has been formed by polymerization; Figure 8(a) is an enlarged sectional conceptional view, in molecular order, of a substrate on which one layer of TCA LB film is formed; Figure 8(b) is an enlarged sectional conceptional view, in molecular order, of a substrate on which a cis-polyacetylene has been formed by polymerization; Figure 9(a) is an enlarged sectional conceptional view, in molecular order, of a substrate on which one layer of 1-(trimethylsilyl)-1-tricosynoic acid LB film is formed; Figure 9(b) is an enlarged sectional conceptional view, in molecular order, of a substrate on which a cis-polyacetylene has been formed by polymerization; and Figures 10(a) to 10(e) are conceptional diagrams of molecular order illustrating a process for producing a polyacene type super long conjugated polymer.

Next, referring to examples, this invention will be explained in more detail.

Example 1

(i) In this example, a case using ω-nonadecylynoic trichlorosilane (NTS: $HC{\equiv}C\text{-}(CH_2)_n\text{-}SiCl_3$, n=17) which is a kind of acetylene derivatives and has one acetylenic group on the molecular end, will be mentioned. (Though n was 17 in this example, good results were obtained also when n was in the range of 14 to 24.)

For example, by chemical adsorption a monomolecular film of NTS was formed on the surface of a Si substrate 1 on which $SiO_2$ had previously been formed. At the time of chemical adsorption, -SiCl group was reacted with the OH group formed on the substrate surface together with $SiO_2$ to cause dehydrochlorination. As the result, monomolecular film 2 of the following formula:

$$HC{\equiv}C\text{-}(CH_2)_{17}\text{-}\overset{|}{\underset{|}{Si}}\text{-}O\text{-}$$

was formed on the substrate surface. Actually, when the Si substrate on which $SiO_2$ had previously been formed, was dipped in a solution of NTS (concentration: $2.0 \times 10^{-3}$ to $5.0 \times 10^{-3}$ mol/liter) in a solvent mixture consisting of 80% n-hexane, 12% carbon tetrachloride and 8% chloroform at room temperature for a few minutes, -Si-O- bond was formed on the surface of $SiO_2$ {cf. Figure 1(a)}.

By means of FTIR, it was confirmed that monomolecular film 2 of the following formula:

$$HC{\equiv}C\text{-}(CH_2)_{17}\text{-}\overset{|}{\underset{|}{Si}}\text{-}O\text{-}$$

was formed on the substrate surface.

The preparation of this chemically adsorbed film was carried out in an atmosphere of nitrogen containing no moisture. Substrate 1 used for formation of the chemically adsorbed film was a Si substrate on which was formed an oxide film ($SiO_2$) having a diameter of 3 inches.

Next, the substrate on which one layer of NTS adsorbed film had been formed, was dipped in toluene having dissolved therein $MoCl_5$ as a metallic catalyst, and temperature of the solvent was elevated to about 30 to 70°C. Thus, a reaction shown in Figure 1(b), i.e., a reaction catalyzed by the metal halide catalyst took place to form trans-polyacetylene bond 3. The formation of the trans-polyacetylene bond was confirmed by FTIR. When $WCl_6$, $NbCl_5$ or $TaCl_5$ was used as the catalyst, a similar polymeric film was obtained although the molecular weight was different from that in the above-mentioned case. Further, when the substrate was dipped in a solution of $Mo(CO)_6$ or $W(CO)_6$ catalyst in $CCl_4$ solvent and it was irradiated with ultraviolet ray, a reddish brown polymeric film was obtained although its molecular weight was different from the above.

(ii) Further, it was confirmed that, when one layer of adsorbed film of 1-(trimethylsilyl)-ω-nonadecylynoic trichlorosilane (TMS-NTS: $Me_3Si-C{\equiv}C-(CH_2)_n-SiCl_3$) (though n was 17 herein, good results were obtained when n was in the range of 14 to 24) formed on the same Si substrate as above {Figure 2(a)} was dipped in a solution of $WCl_6$ (metallic catalyst) and $Bu_4Sn$ (co-catalyst) (1:1) in toluene and temperature of the solvent was elevated to about 30 to 70°C, trans-polyacetylene bond 3 having $-SiMe_3$ groups was formed as shown in Figure 2(b).

(iii) Moreover, it was confirmed that, when a silicon substrate on which one layer of NTS adsorbed film had been formed {Figure 3(a)} was dipped in a solution of $MoCl_5$ (metallic catalyst) in anisole (oxygen-containing organic solvent) and temperature of the solvent was elevated to about 30 to 70°C, cis-polyacetylene 4 was formed as shown in Figure 3(b).

(iv) It was also confirmed that, when a Si substrate on which one layer of TMS-NTS adsorbed film had been formed {Figure 4(a)} was dipped in a solution of $MoCl_5$ (metallic catalyst) and $ph_3Bi$ (co-catalyst) (1:1) in anisole (oxygen-containing organic solvent) and temperature of the solvent was elevated to about 30 to 70°C, cis-polyacetylene 4 having $-SiMe_3$ groups was formed as shown in Figure 4(b).

On the other hand, it was confirmed that the adsorbed films formed by the above-mentioned methods were insoluble in alcoholic solvents.

Based on the above-mentioned results, it was confirmed that a cis- or trans-polyacetylene can easily be produced according to the polymerization process of this invention.

As compared with the polyacetylene derivatives produced according to prior processes using Ziegler-Natta catalyst, the polyacetylenes produced in the above-mentioned manner were far more stable to heat, pressure and ultraviolet ray even in oxygen-containing atmospheres.

In the above-mentioned experiments, only the cases of NTS and TMS-NTS were studied. However, it is doubtless that the same process as above is applicable also to other acetylene compounds so far as they have acetylenic group ($C{\equiv}C$) in their molecules and can form an adsorbed film, even if the conditions of adsorption are different from those mentioned above.

(v) For example, also in case of using tricosadiynoic trichlorosilane having one diacetylenic group 6 {$H-C{\equiv}C-C{\equiv}C-(CH_2)_{19}-SiCl_3$: Figure 5(a), 5(b)}, a monomolecular film of a polyacetylene type super long conjugated polymer having trans-polyacetylene bond 3 {Figure 5(d)} can be obtained by preparing a chemically adsorbed film {Figure 5(c)} and thereafter polymerizing it with a metallic catalyst. Further, when the polyacetylene type super long conjugated polymer obtained from the polydiacetylene is polymerized by irradiating it with electron beam (it may also be other radiations such as X ray, gamma ray and the like), a polyacene type super long conjugated polymer having polyacene bond 5 {Figure 5(e)} is obtained.

In each of the experiments mentioned above, one layer of a chemically adsorbed film was formed and it was polymerized. Needless to say, however, the polymerization may be carried out after laminating the adsorbed film to form a multi-layer structure. Further, a multilayer molecular film of polyacetylene can be prepared by alternately performing the formation of adsorbed film and the polymerization reaction.

Example 2

(i) In this example, a case using ω-tricosynoic acid which is a kind of acetylene derivatives (TCA:$CH{\equiv}C-(CH_2)_n-COOH$; n is 20 herein, though good results were obtained when n was in the range of 14 to 23) will be mentioned.

LB film was build-up in a clean room of class 100 illuminated with yellow light from which the lights below 500 nm were cut off by the use of Joyce-Loebl Trough IV. The atmosphere in the clean room was conditioned at a temperature of 23±1°C and a humidity of 40±5%. The substrate used for building-up of LB film was an Si substrate on which an oxide film having a diameter of 3 inches had been previously formed. In the

polymerization reaction, $MoCl_5$, $WCl_6$, $NbCl_5$, $TaCl_5$, $Mo(CO)_5$, $W(CO)_6$, $Nb(CO)_5$ and $Ta(CO)_5$ could be used as the metal halide catalyst. As the organic solvent, toluene, dioxane and anisole could be used.

By building-up LB film of ω-tricosynoic acid (TCA) on Si substrate 11 by use of a water phase containing an inorganic salt such as $CaCl_2$ or the like, monomolecular film 12 having a molecular arrangement shown in Figure 6(a) was obtained. Then, by dipping the substrate on which one layer of LB film of ω- tricosynoic acid was build-up, into a solution of $MoCl_5$ (metallic catalyst) in toluene and elevating the temperature of the solvent to about 30 to 70°C, trans-polyacetylene bond 13 shown in Figure 6(b) was formed. Formation of 13 was confirmed by FTIR. When $WCl_6$, $NbCl_5$ or $TaCl_5$ was used as the catalyst, a polymeric film could be obtained similarly, although its molecular weight was different from that of the above-mentioned polymeric film. When the substrate was dipped in a solution of $Mo(CO)_6$ or $W(CO)_6$ (catalyst) in $CCl_4$ solvent and it was irradiated with ultraviolet ray, a reddish brown polymeric film was obtained, although its molecular weight was different from the above.

(ii) Further, when a Si substrate on which one layer of LB film of 1-(trimethylsilyl)-ω-tricosynoic acid (TMS-TCA: $Me_3Si-C{\equiv}C-(CH_2)_n-$ COOH; n was 20 herein, though good results were obtained when n was in the range of 14 to 23) was built-up {Figure 7(a)}, was dipped in a solution of $WCl_6$ (metallic catalyst) and $Bu_4Sn$ (co-catalyst) (1:1) in toluene and temperature of the solvent was elevated to about 30 to 70°C, trans-polyacetylene bond 13 having-$SiMe_3$ groups was formed as shown in Figure 7(b). This was revealed by FTIR.

(iii) Furthermore, when a Si substrate on which one layer of LB film of ω-tricosynoic acid was formed {Figure 8(a)}, was dipped in a solution of $MoCl_5$ (metallic catalyst) in anisole (oxygen-containing organic solvent) and temperature of the solvent was elevated to about 30 to 70°C, cis-polyacetylene 14 was formed as shown in Figure 8(b). Its formation was confirmed by FTIR.

(iv) Moreover, when a Si substrate on which one layer of LB film of TMS-TCA was formed {Figure 9(a)}, was dipped in a solution of $MoCl_{15}$ (metallic catalyst) and $ph_3Bi$ (co-catalyst) (1:1) in anisole (oxygen-containing organic solvent) and temperature of the solvent was elevated to about 30 to 70°C, cis-polyacetylene 14 having -$SiMe_3$ groups could be produced as shown in Figure 9(b). This was revealed by FTIR.

It was confirmed that the LB films formed by the above-mentioned processes were insoluble in alcoholic solvents.

Based on the above-mentioned results, it was confirmed that a cis- or trans-polyacetylene can easily be produced according to the polymerization process of this invention.

As compared with polyacetylene derivatives produced by prior process using Ziegler-Natta catalyst, the polyacetylenes produced in the above-mentioned manner were far more stable to heat, pressure and ultraviolet ray even in an oxygen-containing atmosphere.

When a direct current bias of several tens volts was applied in the direction of water surface at the time of gathering the acetylene derivative molecules with a barrier on the water surface in the direction of surface and building-up them, orientation of the monomer molecules was furthermore improved and a polyacetylene type super long conjugated polymer having a longer conjugated bond was prepared.

In the experiments mentioned above, only the cases of ω-tricosynoic acid and TMS-TCA have been mentioned. However, it is doubtless that the same process as above is applicable also to other acetylene derivatives so far as they have an acetylenic group (C≡C) in their molecules and can form LB film, even if the conditions of building-up may be different from the above.

(v) For example, when pentacosadiynoic acid {$H-C{\equiv}C-C{\equiv}C-(CH_2)_{20}-COOH$; Figure 10(a)} having one diacetylenic group 16 is formed into LB film {Figure 10(c)} and thereafter polymerized by the use of a metallic catalyst, a monomolecular film of a polyacetylene type super long conjugated polymer having trans-polyacetylene bond 13 {Figure 10(d)} is obtained. Further, when the polyacetylene type super long conjugated polymer obtained from the polydiacetylene is polymerized by irradiating it with electron beam (it may also be other radiations such as X ray, gamma ray and the like), a polyacene type super long conjugated polymer having polyacene type bond 15 {Figure 10(e)} is obtained.

In each of the experiments mentioned above, one layer of LB film was built-up and thereafter polymerized. However, the polymerization may be carried out after building-up many layers of LB films. Further, it is also possible to produce a polyacetylene type super long conjugated polymer film having a multi-molecular layer by alternately carrying out the building-up and the polymerization reaction.

According to the process of this invention, a stable polyacetylene type super long conjugated polymer quite excellent in electrical conductivity and nonlinear optical effect can be produced with a high efficiency. Theoretically, it is possible to produce a straight chain, super high molecular weight polyacetylene type of super long conjugated polymer of which continuous conjugated bond has a length of several millimeters or more than several centimeters by using

the process of this invention, and therefore the process of this invention is quite effective for production of devices utilizing nonlinear optical effect. Further, it is expected in the future to produce a straight chain, super high molecular weight, stable, polyacetylene type or polyacene type super long conjugated polymer of which continuous conjugaged bond has a length of several tens centimeters or more than several meters by finding the optimum kind of starting acetylene or diacetylene derivative monomers and the optimum production conditions. This suggests a possibility that an organic super conducting substance requiring no cooling may be producible according to the process of this invention.

## Claims

1. A process for producing a polyacetylene type super long conjugated polymer which comprises dipping a substrate having a hydrophilic surface into a solution of a substance having an acetylenic group and -Si-Cl group in a first nonaqueous organic solvent to form a monomolecular film of said substance on said substrate by chemical adsorption and then dipping the substrate on which said monomolecular film has been deposited into a second organic solvent containing a metal halide catalyst to polymerize the acetylenic group part of the monomolecular film.

2. A process for producing a polyacetylene type super long conjugated polymer according to Claim 1, wherein said acetylenic group is a diacetylenic group.

3. A process for producing a polyacetylene type super long conjugated polymer according to Claim 1, wherein said acetylenic group is linked to -Si$Me_3$ group.

4. A process for producing a polyacetylene type super long conjugated polymer according to Claim 1, 2 or 3, wherein the metal in said metal halide catalyst is Mo, W, Nb or Ta.

5. A process for producing a polyacetylene type super long conjugated polymer according to Claim 1, 2, 3 or 4, wherein the second organic solvent contains, in addition to said metal halide catalyst, an organo-Sn compound or an organo-Bi compound as a co-catalyst.

6. A process for producing a cis-polyacetylene type super long conjugated polymer according to Claim 5, wherein the second organic solvent is an oxygen-containing organic solvent and said metal halide catalyst is $MoCl_5$.

7. A process for producing a cis-polyacetylene type super long conjugated polymer according to Claim 6, wherein said acetylenic group is linked to -$SiMe_3$ group.

8. A process for producing a polyacetylene type super long conjugated polymer according to Claim 1, wherein said substance having an acetylenic group and -SiCl group is a compound represented by the following general formula:

$$RC\equiv C-(CH_2)_n-SiCl_3$$

wherein R is -H or a substituent and n is an integer of 14 to 24.

9. A process for producing a polyacetylene type super long conjugated polymer according to Claim 1 or 2, wherein said substance having an acetylenic group and -SiCl group is ω-nonadecylynoic trichlorosilane or 1(trimethylsilyl)-ω-nonadecylynoic trichlorosilane.

10. A process for producing a polyacene type super long conjugated polymer which comprises dipping a substrate having a hydrophilic surface into a solution of a substance having a diacetylenic group $(-C\equiv C-)_2$ and -SiCl group in a first nonaqueous organic solvent to form a monomolecular film of said substance on said substrate by chemical adsorption and then dipping the substrate on which said monomolecular film is deposited into a second organic solvent containing a metal halide catalyst to polymerize one of the acetylenic groups in the diacetylenic group part of said monomolecular film, and thereafter irradiating it with a high energy beam to polymerize the other acetylenic group.

11. A process for producing a polyacetylene type super long conjugated polymer which comprises spreading a substance having an acetylenic group dissolved in an organic solvent on water surface, vaporizing off the organic solvent, gathering the molecules of the substance having an acetylenic group remaining on the water surface by means of a barrier in the direction of water surface, applying a predetermined surface pressure to form a monomolecular film on the water surface, building-up said monomolecular film on a substrate while moving the substrate up and down so as to cross the monomolecular film under a predetermined surface pressure, and dipping the substrate on which the monomolecular film built-up in an organic solvent containing a metal halide catalyst to polymerize the acetylenic group part of the monomolecular film.

12. A process for producing a polyacetylene type super long conjugated polymer according to Claim

11, wherein the building-up of the monomolecular film is carried out while applying the predetermined surface pressure and, at the same time, applying a direct electrical field in the direction parallel to the water surface.

**13.** A process for producing a polyacetylene type super long conjugated polymer according to Claim 11 or 12, wherein said water contains an inorganic salt.

**14.** A process for producing a polyacetylene type super long conjugated polymer according to Claim 11 or 12, wherein said acetylenic group is a diacetylenic group.

**15.** A process for producing a polyacetylene type super long conjugated polymer according to Claim 11 or 12, wherein said acetylenic group is linked to $-SiMe_3$ group.

**16.** A process for producing a polyacetylene type super long conjugated polymer according to Claim 11 or 12, wherein the metal in said metal halide catalyst is Mo, W, Nb or Ta.

**17.** A process for producing a polyacetylene type super long conjugated polymer according to Claim 11 or 12, wherein said organic solvent contains, in addition to the metal halide catalyst, an organo-Sn compound or an organo-Bi compound as a co-catalyst.

**18.** A process for producing a cis-polyacetylene type super long conjugated polymer according to Claim 11 or 12, wherein said organic solvent is an oxygen-containing organic solvent and said metal halide catalyst is $MoCl_5$.

**19.** A process for producing a cis-polyacetylene type super long conjugated polymer according to Claim 18, wherein said acetylenic group is linked to $-SiMe_3$ group.

**20.** A process for producing a polyacetylene type super long conjugated polymer according to Claim 11 or 12, wherein said substance having an acetylenic group is a compound represented by the following general formula:

$$RC{\equiv}C\text{-}(CH_2)_n\text{-}COOH$$

wherein R is -H or a substituent and n is an integer of 14 to 23.

**21.** A process for producing a polyacetylene type super long conjugated polymer according to Claim 11 or 12, wherein said substance having an acetylenic group is ω-tricosynoic acid or 1-(trimethylsilyl)-ω-tricosynoic acid.

**22.** A process for producing a polyacene type super long conjugated polymer which comprises spreading a substance having a diacetylenic group ($-C{\equiv}C-C{\equiv}C-$) dissolved in an organic solvent on water surface, vaporizing off the organic solvent, gathering the molecules of the substance having an acetylenic group remaining on the water surface by means of a barrier in the direction of water surface, applying a predetermined surface pressure to form a monomolecular film on the water surface, building-up the monomolecular film on a substrate while moving the substrate up and down so as to cross the monomolecular film under a predetermined surface pressure, dipping the substrate on which the monomolecular film has been cumulated into an organic solvent containing a metal halide catalyst to polymerize one of the acetylenic groups in the diacetylenic group part of the monomolecular film, and irradiating it with a high energy beam to polymerize the other acetylenic group.

## Patentansprüche

**1.** Verfahren zur Herstellung eines superlangen, konjugierten Polymeren vom Polyazetylentyp, welches umfaßt: das Eintauchen eines Substrates mit einer hydrophilen Oberfläche in eine Lösung einer eine azetylenartige Gruppe und eine -Si-Cl-Gruppe aufweisenden Substanz in einem ersten nichtwässrigen organischen Lösungsmittel zur Bildung eines monomolekularen Filmes dieser Substanz auf diesem Substrat durch chemische Adsorption und dann das Eintauchen des Substrates, auf welchem dieser monomolekulare Film abgelagert worden ist, in ein zweites organisches Lösungsmittel, das einen Metallhalogenidkatalysator enthält, zur Polymerisation des Azetylengruppenteiles des monomolekularen Filmes.

**2.** Verfahren zur Herstellung eines superlangen, konjugierten Polymeren vom Polyazetylentyp nach Anspruch 1, worin diese azetylenartige Gruppe eine diazetylenartige Gruppe ist.

**3.** Verfahren zur Herstellung eines superlangen, konjugierten Polymeren vom Polyazetylentyp nach Anspruch 1, worin diese azetylenartige Gruppe an eine $-SiMe_3$-Gruppe gebunden ist.

**4.** Verfahren zur Herstellung eines superlangen, konjugierten Polymeren vom Polyazetylentyp nach Anspruch 1, 2 oder 3, worin das Metall in diesem Metallhalogenidkatalysator Mo, W, Nb oder Ta ist.

**5.** Verfahren zur Herstellung eines superlangen,

konjugierten Polymeren vom Polyazetylentyp nach Anspruch 1, 2, 3 oder 4, worin dieses zweite organische Lösungsmittel zusätzlich zu diesem Metallhalogenidkatalysator eine Organo-Sn-verbindung oder eine Organo-Bi-verbindung als Co-katalysator enthält.

6. Verfahren zur Herstellung eines superlangen, konjugierten Polymeren vom cis-Polyazetylentyp nach Anspruch 5, worin das zweite organische Lösungsmittel ein sauerstoffhaltiges organisches Lösungsmittel ist und dieser Metallhalogenidkatalysator $MoCl_5$ ist.

7. Verfahren zur Herstellung eines superlangen, konjugierten Polymeren vom cis-Polyazetylentyp nach Anspruch 6, worin diese azetylenartige Gruppe an eine $-SiMe_3$-Gruppe gebunden ist.

8. Verfahren zur Herstellung eines superlangen, konjugierten Polymeren vom Polyazetylentyp nach Anspruch 1, worin diese eine azetylenartige Gruppe und eine -SiCl-Gruppe aufweisende Substanz eine durch die folgende allgemeine Formel wiedergegebene Verbindung ist:

$$RC{\equiv}C-(CH_2)_n-SiCl_3$$

worin R = -H oder ein Substituent ist und n eine ganze Zahl von 14 bis 24 ist.

9. Verfahren zur Herstellung eines superlangen, konjugierten Polymeren vom Polyazetylentyp nach Anspruch 1 oder 2, worin diese eine azetylenartige Gruppe und eine -SiCl-Gruppe aufweisende Substanz ω-Nonadecinyl-trichlorsilan oder 1-(Trimethylsilyl)-ω-nonadecinyl-trichlorsilan ist.

10. Verfahren zur Herstellung eines superlangen, konjugierten Polymeren vom Polyazetylentyp, welches umfaßt: das Eintauchen eines Substrates mit einer hydrophilen Oberfläche in eine Lösung einer eine Diazetylengruppe $(-C{\equiv}C-)_2$ und eine -SiCl-Gruppe aufweisenden Substanz in einem ersten nichtwässrigen organischen Lösungsmittel zur Bildung eines monomolekularen Filmes dieser Substanz auf diesem Substrat durch chemische Adsorption und dann das Eintauchen des Substrates, auf welchem dieser monomolekulare Film abgelagert ist, in ein zweites organisches Lösungsmittel, das einen Metallhalogenidkatalysator enthält, zur Polymerisation einer der azetylenartigen Gruppen in dem Diazetylengruppenteil dieses monomolekularen Filmes und danach sein Bestrahlen mit einem Hochenergiestrahl zur Polymerisation der anderen azetylenartigen Gruppe.

11. Verfahren zur Herstellung eines superlangen, konjugierten Polymeren vom Polyazetylentyp, welches umfaßt: das Ausbreiten einer eine Azetylengruppe aufweisenden, in einem organischen Lösungsmittel aufgelösten Substanz auf einer Wasseroberfläche, Abdampfen des organischen Lösungsmittels, Sammeln der auf der Wasseroberfläche verbliebenen, eine azetylenartige Gruppe aufweisenden Moleküle der Substanz mittels einer Barriere in der Richtung der Wasseroberfläche, Anlegen eines vorbestimmten Oberflächendruckes zur Bildung eines monomolekularen filmes auf der Wasseroberfläche, Aufbau dieses monomolekularen filmes auf einem Substrat während des Auf- und Abbewegens des Substrates, so daß der monomolekulare film unter einem vorbestimmten Oberflächendruck gekreuzt wird, und Eintauchen des Substrates, auf welchem der monomolekulare film sich aufbaute, in ein einen Metallkatalysator enthaltendes organisches Lösungsmittel zur Polymerisation des Teiles der azetylenartigen Gruppen des monomolekularen Filmes.

12. Verfahren zur Herstellung eines superlangen, konjugierten Polymeren vom Polyazetylentyp nach Anspruch 11, worin das Aufbauen des monomolekulren Filmes ausgeführt wird, während der vorbestimmte Oberflächendruck angelegt wird, und daß zur gleichen Zeit ein elektrisches Gleichstromfeld in der Richtung parallel zur der Wasseroberfläche angelegt wird.

13. Verfahren zur Herstellung eines superlangen, konjugierten Polymeren vom Polyazetylentyp nach Anspruch 11 oder 12, worin dieses Wasser ein anorganisches Salz enthält.

14. Verfahren zur Herstellung eines superlangen, konjugierten Polymeren vom Polyazetylentyp nach Anspruch 11 oder 12, worin diese azetylenartige Gruppe eine diazetylenartige Gruppe ist.

15. Verfahren zur Herstellung eines superlangen, konjugierten Polymeren vom Polyazetylentyp nach Anspruch 11 oder 12, worin diese azetylenartige Gruppe an eine $-SiMe_3$-Gruppe gebunden ist.

16. Verfahren zur Herstellung eines superlangen, konjugierten Polymeren vom Polyazetylentyp nach Anspruch 11 oder 12, worin das Metall in diesem Metallhalogenidkatalysator Mo, W, Nb oder Ta ist.

17. Verfahren zur Herstellung eines superlangen, konjugierten Polymeren vom Polyazetylentyp nach Anspruch 11 oder 12, worin dieses organische Lösungsmittel zusätzlich zu dem Metallhalogenidkatalysator eine Organo-Sn-verbindung

oder eine Organo-Bi-verbindung als Co-katalysator enthält.

**18.** Verfahren zur Herstellung eines superlangen, konjugierten Polymeren vom cis-Polyazetylentyp nach Anspruch 11 oder 12, worin dieses organische Lösungsmittel ein sauerstoffhaltiges organisches Lösungsmittel ist, und dieser Metallhalogenidkatalysator $MoCl_5$ ist.

**19.** Verfahren zur Herstellung eines superlangen, konjugierten Polymeren vom cis-Polyazetylentyp nach Anspruch 18, worin diese Azetylengruppe an eine $-SiMe_3$-Gruppe gebunden ist.

**20.** Verfahren zur Herstellung eines superlangen, konjugierten Polymeren vom Polyazetylentyp nach Anspruch 11 oder 12, worin diese eine azetylenartige Gruppe aufweisende Substanz eine durch die folgende allgemeine Formel wiedergegebene Verbindung ist:

$$RC{\equiv}C\text{-}(CH_2)_n\text{-}COOH$$

worin R -H oder ein Substituent ist und n eine ganze Zahl von 14 bis 23 ist.

**21.** Verfahren zur Herstellung eines superlangen, konjugierten Polymeren vom Polyazetylentyp nach Anspruch 11 oder 12, worin diese eine azetylenartige Gruppe aufweisende Substanz ω-Tricosin-carbonsäure oder 1-(Trimethylsilyl)-ω-tricosincarbonsäure ist.

**22.** Verfahren zur Herstellung eines superlangen, konjugierten Polymeren vom Polacentyp, welches umfaßt: das Ausbreiten einer eine Diazetylengruppe (-C≡C-C≡C-) aufweisenden, in einem organischen Lösungsmittel aufgelösten Substanz auf einer Wasseroberfläche, bedampfen des organischen Lösungsmittels, Sammeln der auf der Wasseroberfläche verbliebenen, eine azetylenartige Gruppe aufweisenden Moleküle der Substanz mittels einer Barriere in der Richtung der Wasseroberfläche, Anlegen eines vorbestimmten Oberflächendruckes zur Bildung eines monomolekularen Filmes auf der Wasseroberfläche, Aufbau dieses monomolekularen Filmes auf einem Substrat während des Auf- und Abbewegens des Substrates, so daß der monomolekulare Film unter einem vorbestimmten Oberflächendruck gekreuzt wird, Eintauchen des Substrates, auf welchem der monomolekulare Film kumuliert wurde, in ein einen Metallhalogenidkatalysator enthaltendes, organisches Lösungsmittel zur Polymerisation einer der azetylenartigen Gruppen in dem Teil der diazetylenartigen Gruppen des monomolekularen Filmes, und Bestrahlen hiervon mit einem Hochenergiestrahl zur Polymerisation der anderen azetylenartigen Gruppe.

## Revendications

**1.** Procédé de production d'un polymère conjugué à très longue chaîne du type polyacétylène, qui consiste à immerger un substrat comportant une surface hydrophile dans une solution d'une substance comportant un groupe acétylénique et un groupe -Si-Cl dans un premier solvant organique non aqueux,pour former un film monomoléculaire de ladite substance sur ledit substrat par adsorption chimique, puis à immerger le substrat, sur lequel a été déposé ledit film monomoléculaire, dans un deuxième solvant organique contenant un catalyseur à l'halogénure métallique pour polymériser la partie du film monomoléculaire constituée du groupe acétylénique.

**2.** Procédé de production d'un polymère conjugué à très longue chaîne du type polyacétylène selon la revendication 1, dans lequel ledit groupe acétylénique est un groupe diacétylénique.

**3.** Procédé de production d'un polymère conjugué à très longue chaîne du type polyacétylène selon la revendication 1, dans lequel ledit groupe acétylénique est lié à un groupe $-SiMe_{3.}$

**4.** Procédé de production d'un polymère conjugué à très longue chaîne du type polyacétylène selon les revendications 1, 2 ou 3, dans lequel le métal dudit catalyseur à l'halogénure métallique est Mo, W, Nb ou Ta.

**5.** Procédé de production d'un polymère conjugué à très longue chaîne du type polyacétylène selon les revendications 1, 2, 3 ou 4, dans lequel le deuxième solvant organique contient, en plus dudit catalyseur à l'halogénure métallique, un composé organique du Sn ou un composé organique du Bi en tant que co-catalyseur.

**6.** Procédé de production d'un polymère conjugué à très longue chaîne du type cis-polyacétylène selon la revendication 5, dans lequel le deuxième solvant organique est un solvant organique oxygéné et ledit catalyseur à l'halogénure métallique est $MoCl_5$.

**7.** Procédé de production d'un polymère conjugué à très longue chaîne du type cis-polyacétylène selon la revendication 6, dans lequel ledit groupe acétylénique est lié à un groupe $-SiMe_{3.}$

**8.** Procédé de production d'un polymère conjugué à très longue chaîne du type polyacétylène selon la

revendication 1, dans lequel ladite substance comportant un groupe acétylénique et un groupe -SiCl est un composé représenté par la formule générale suivante :

$$RC \equiv C-(CH_2)_n-SiCl_3$$

dans laquelle R est -H ou un substituant, et n est un entier de 14 à 24.

**9.** Procédé de production d'un polymère conjugué à très longue chaîne du type polyacétylène selon la revendication 1 ou 2, dans lequel ladite substance comportant un groupe acétylénique et un groupe -SiCl est le trichlorosilane oméga-nonadécylynoïque ou le trichlorosilane 1-(triméthyl-silyl)-oméga-nonadécylynoïque.

**10.** Procédé de production d'un polymère conjugué à très longue chaîne du type polyacène, qui consiste à immerger un substrat ayant une surface hydrophile dans une solution d'une substance comportant un groupe diacétylénique $(-C\equiv C-)_2$ et un groupe -SiCl dans un premier solvant organique non aqueux pour former un film monomoléculaire de ladite substance sur ledit substrat par adsorption chimique, puis à immerger le substrat, sur lequel est déposé ledit film monomoléculaire, dans un deuxième solvant organique contenant un catalyseur à l'halogénure métallique pour polymériser l'un des groupes acétyléniques de la partie dudit film monomoléculaire constituant un groupe diacétylénique, puis à l'irradier par un faisceau à haute énergie pour polymériser l'autre groupe acétylénique.

**11.** Procédé de production d'un polymère conjugué à très longue chaîne du type polyacétylène, qui consiste à étaler sur une surface d'eau une substance ayant un groupe acétylénique dissous dans un solvant organique, à chasser par évaporation le solvant organique, à recueillir les molécules de la substance comportant un groupe acétylénique et restant sur la surface de l'eau, au moyen d'une barrière dans la direction de la surface de l'eau, à appliquer sur la surface de l'eau une pression superficielle prédéterminée pour former un film monomoléculaire, à construire ledit film monomoléculaire sur un substrat tout en déplaçant le substrat vers le haut et vers le bas de façon à croiser le film monomoléculaire sous une pression superficielle prédéterminée, et à immerger le substrat sur lequel a été construit le film monomoléculaire dans un solvant organique contenant un catalyseur à l'halogénure métallique pour polymériser la partie du film monomoléculaire constituant le groupe acétylénique.

**12.** Procédé de production d'un polymère conjugué à très longue chaîne du type polyacétylène selon la revendication 11, dans lequel la construction du film monomoléculaire est mise en oeuvre par application de la pression superficielle prédéterminée, et simultanément par application d'un champ électrique direct dans la direction parallèle à la surface de l'eau.

**13.** Procédé de production d'un polymère conjugué à très longue chaîne du type polyacétylène selon la revendication 11 ou 12, dans lequel ladite eau contient un sel minéral.

**14.** Procédé de production d'un polymère conjugué à très longue chaîne du type polyacétylène selon la revendication 11 ou 12, dans lequel ledit groupe acétylénique est un groupe diacétylénique.

**15.** Procédé de production d'un polymère conjugué à très longue chaîne du type polyacétylène selon la revendication 11 ou 12, dans lequel ledit groupe acétylénique est lié à un groupe $-SiMe_3$.

**16.** Procédé de production d'un polymère conjugué à très longue chaîne du type polyacétylène selon la revendication 11 ou 12, dans lequel le métal dudit catalyseur à l'halogénure métallique est Mo, W, Nb ou Ta.

**17.** Procédé de production d'un polymère conjugué à très longue chaîne du type polyacétylène selon la revendication 11 ou 12, dans lequel ledit solvant organique contient en plus du catalyseur à l'halogénure métallique un composé organique du Sn ou un composé organique du Bi en tant que cocatalyseur.

**18.** Procédé de production d'un polymère conjugué à très longue chaîne du type cis-polyacétylène selon la revendication 11 ou 12, dans lequel ledit solvant organique est un solvant organique oxygéné et ledit catalyseur à l'halogénure métallique est $MoCl_5$.

**19.** Procédé de production d'un polymère conjugué à très longue chaîne du type cis-polyacétylène selon la revendication 18, dans lequel ledit groupe acétylénique est lié à un groupe $-SiMe_3$.

**20.** Procédé de production d'un polymère conjugué à très longue chaîne du type polyacétylène selon la revendication 11 ou 12, dans lequel ladite substance comportant un groupe acétylénique est un composé représenté par la formule générale suivante :

$$RC \equiv C-(CH_2)_n-COOH$$

dans laquelle R est -H ou un substituant, et n est un entier de 14 à 23.

**21.** Procédé de production d'un polymère conjugué à très longue chaîne du type polyacétylène selon la revendication 11 ou 12, dans lequel ladite substance comportant un groupe acétylénique est l'acide oméga-tricosynoïque ou l'acide 1-(tri-méthylsilyl)-oméga-tricosynoïque.

**22.** Procédé de production d'un polymère conjugué à très longue chaîne du type polyacétylène, qui consiste à étaler sur une surface d'eau une substance comportant un groupe diacétylénique (-C=C-C=C-) dissous dans un solvant organique, à chasser par évaporation le solvant organique, à recueillir les molécules de la substance comportant un groupe acétylénique et restant sur la surface de l'eau, au moyen d'une barrière dans la direction de la surface de l'eau, à appliquer sur la surface de l'eau une pression superficielle prédéterminée pour former un film monomoléculaire, à construire ledit film monomoléculaire sur un substrat tout en déplaçant le substrat vers le haut et vers le bas de façon à croiser le film monomoléculaire sous une pression superficielle prédéterminée, à immerger le substrat sur lequel a été construit le film monomoléculaire dans un solvant organique contenant un catalyseur halogénure métallique pour polymériser l'un des groupes acétyléniques de la partie du film monomoléculaire constituant le groupe diacétylénique que, et à l'irradier par un faisceau à haute énergie pour polymériser l'autre groupe acétylénique.

FIG.1

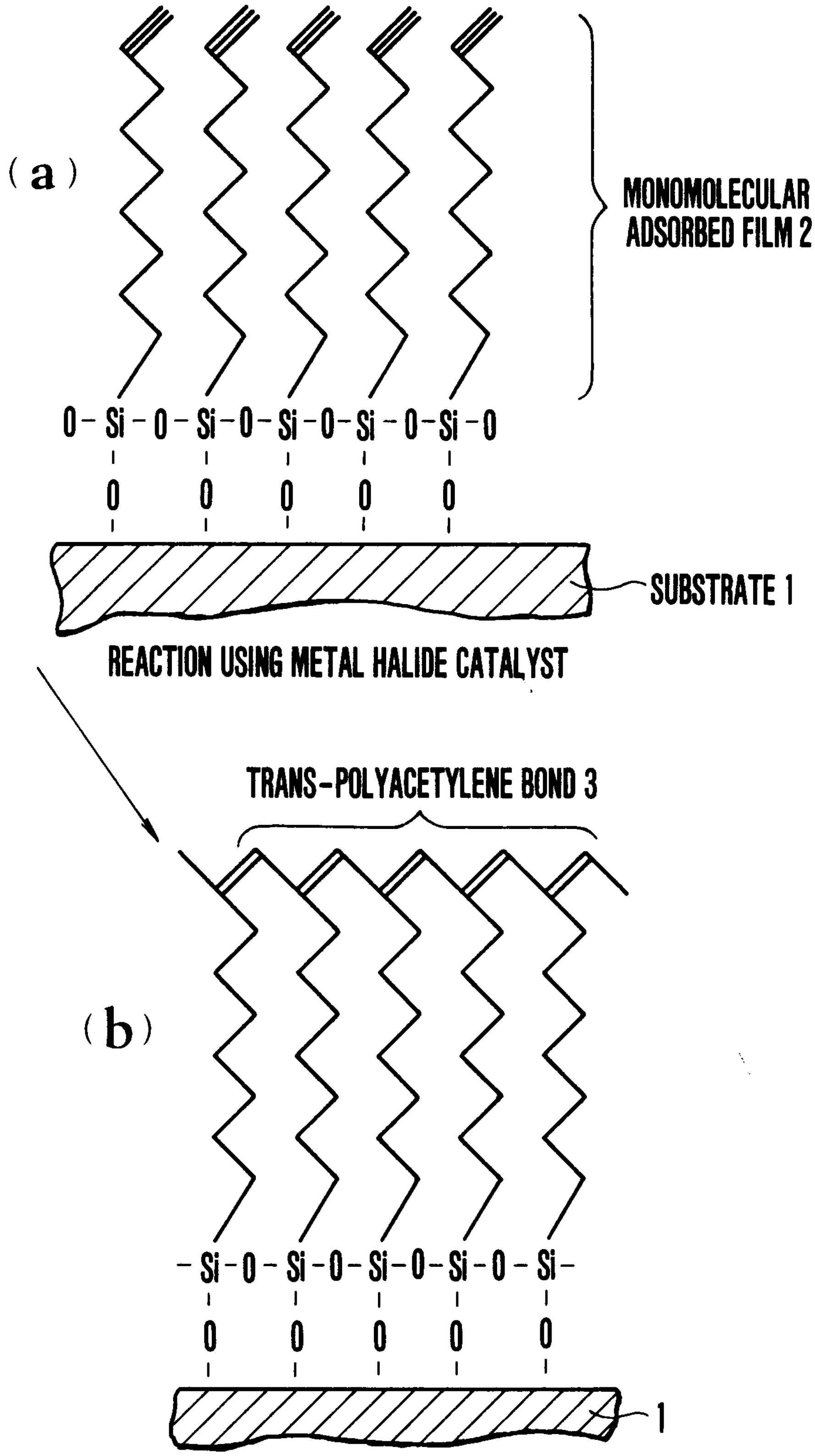
(a)
MONOMOLECULAR ADSORBED FILM 2
SUBSTRATE 1
REACTION USING METAL HALIDE CATALYST
TRANS-POLYACETYLENE BOND 3
(b)
1

FIG.2

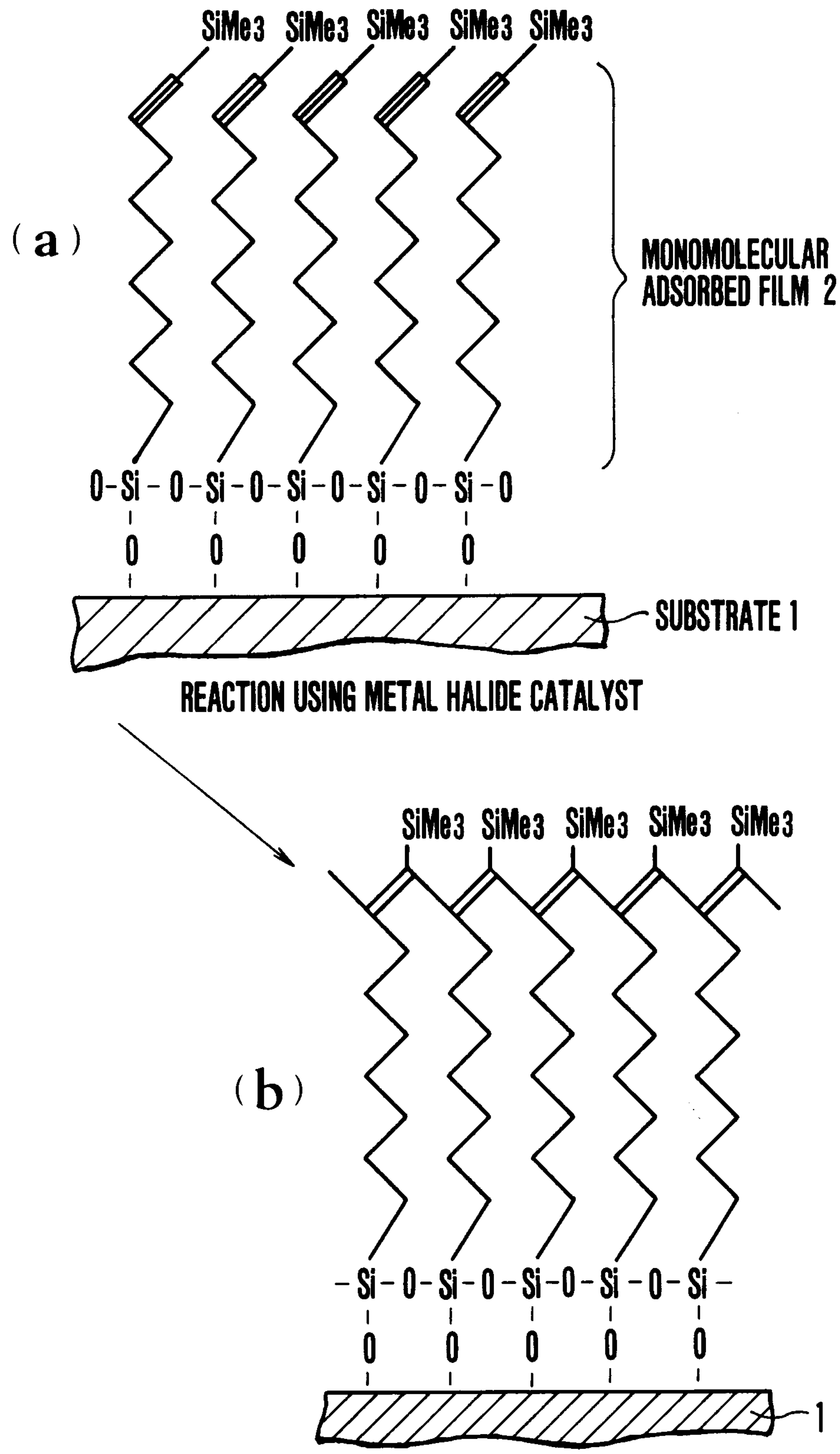
(a)
MONOMOLECULAR ADSORBED FILM 2
SUBSTRATE 1
REACTION USING METAL HALIDE CATALYST
(b)
1

# F I G.3

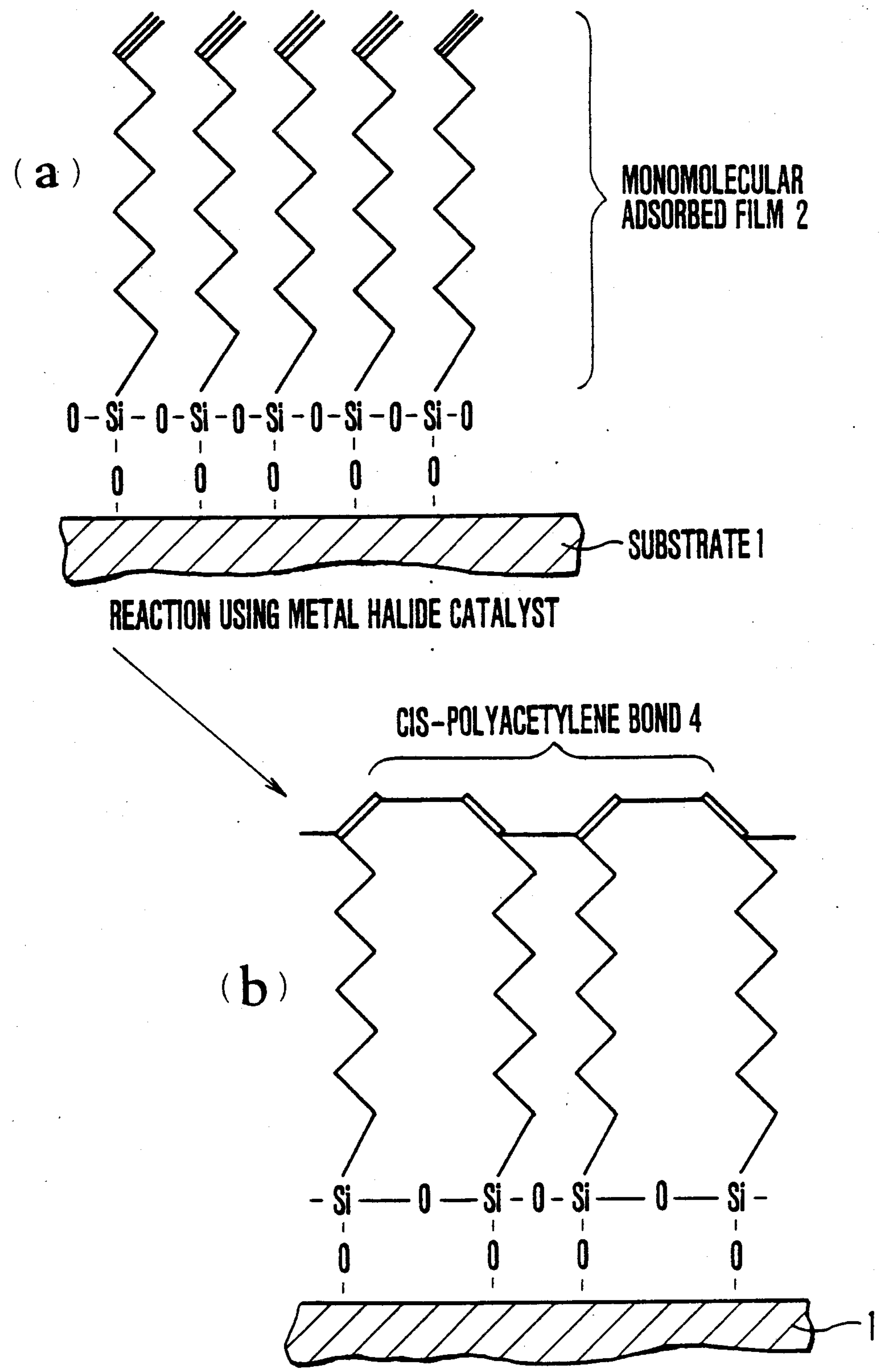
(a)
MONOMOLECULAR ADSORBED FILM 2
O - Si - O - Si - O - Si - O - Si - O - Si - O
O O O O O
SUBSTRATE 1
REACTION USING METAL HALIDE CATALYST
CIS-POLYACETYLENE BOND 4
(b)
- Si — O — Si - O - Si — O — Si -
O O O O
1

# FIG.4

(a)

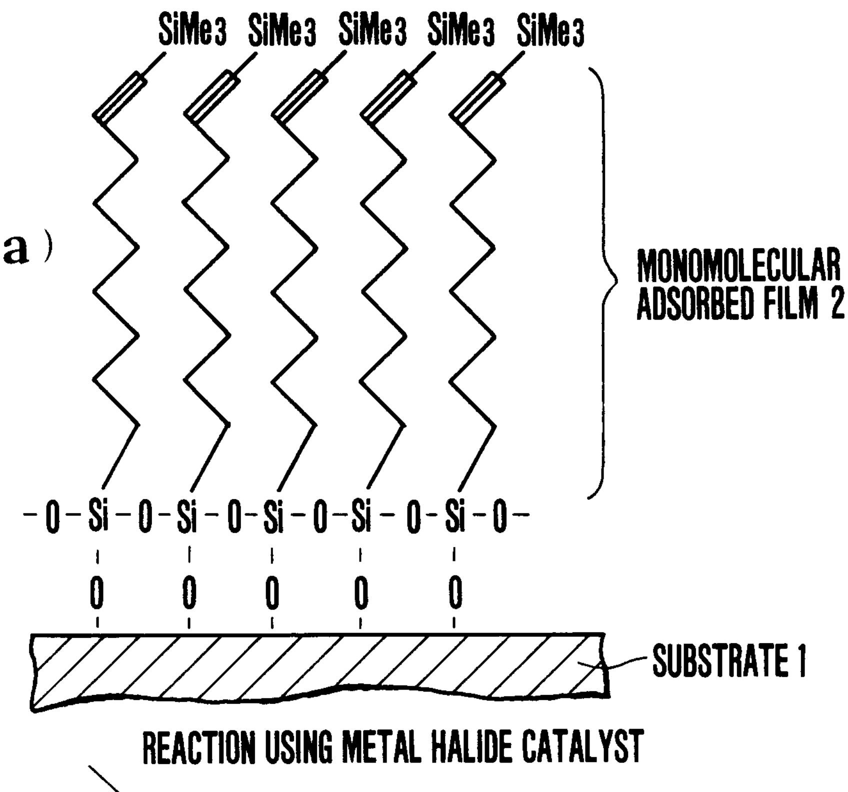
SiMe3 SiMe3 SiMe3 SiMe3 SiMe3
MONOMOLECULAR
ADSORBED FILM 2
-O-Si-O-Si-O-Si-O-Si-O-Si-O-
O O O O O
SUBSTRATE 1
REACTION USING METAL HALIDE CATALYST

(b)

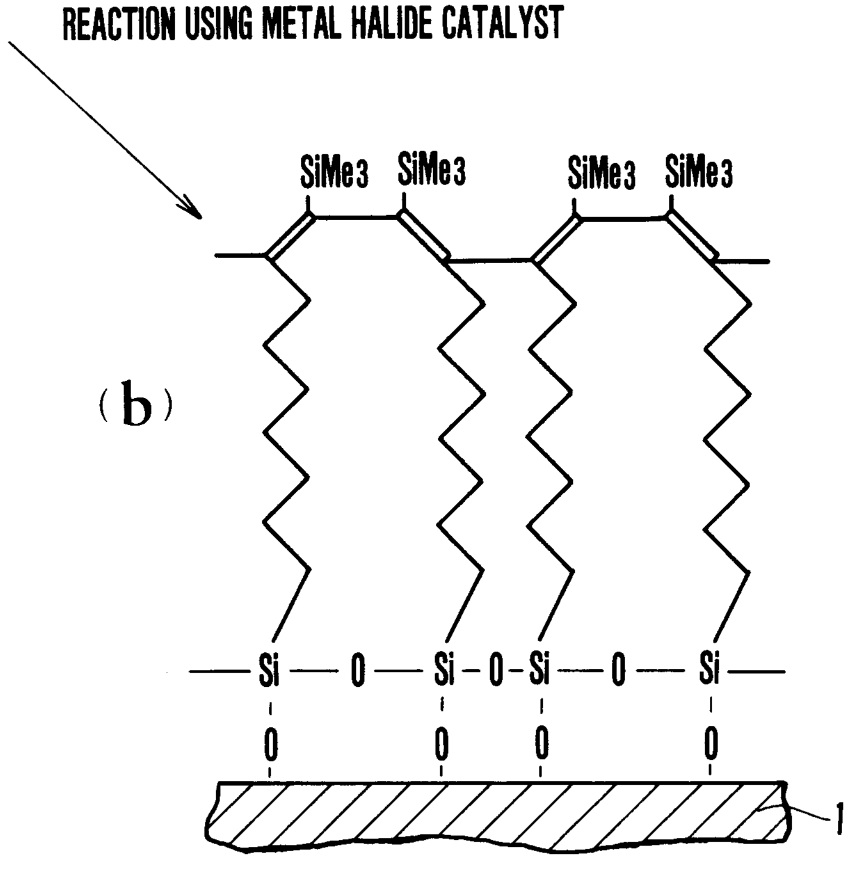
SiMe3 SiMe3 SiMe3 SiMe3
Si O Si O Si O Si
O O O O
1

# F I G.5

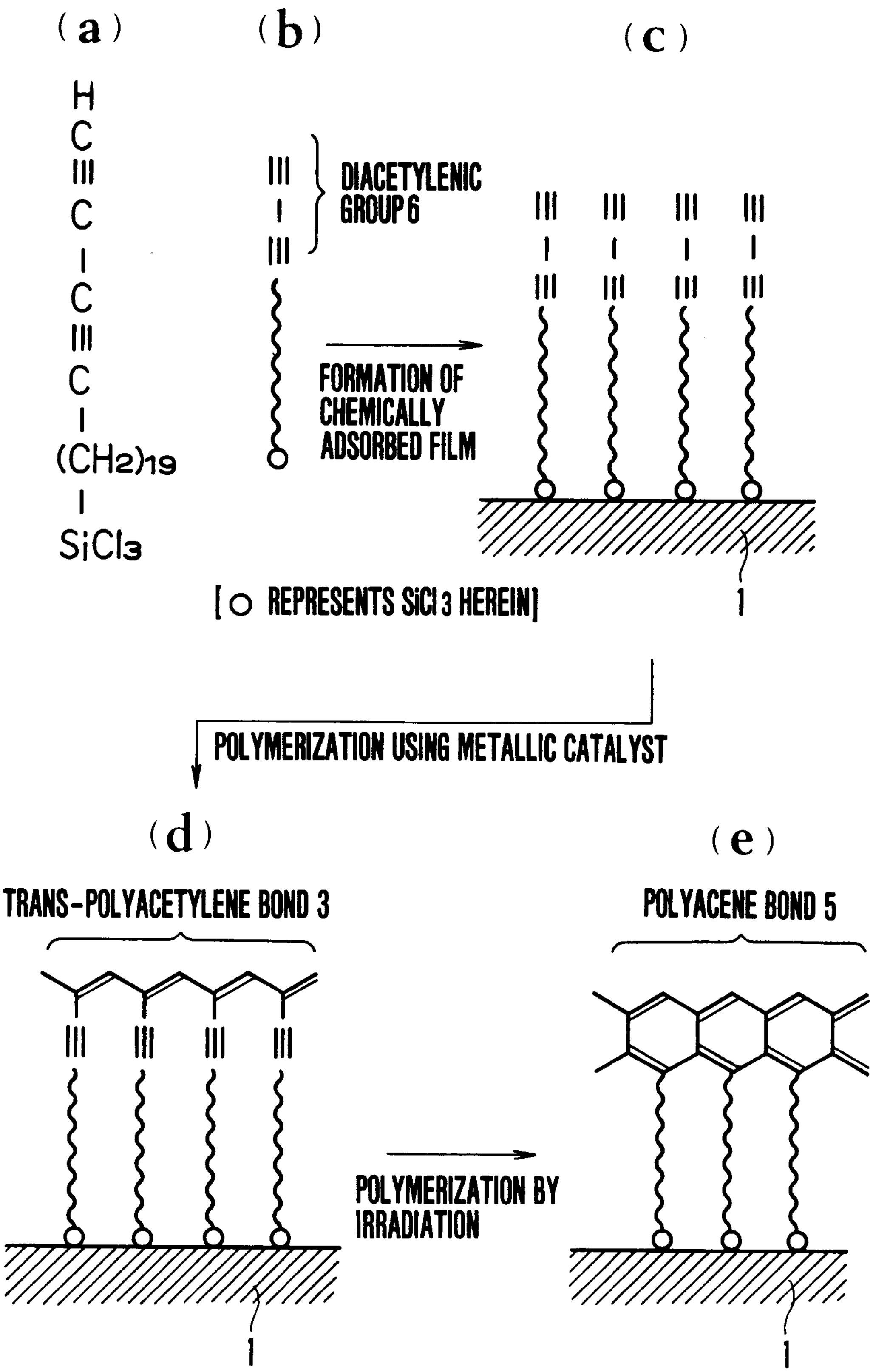
(a)
(b)
(c)
DIACETYLENIC GROUP 6
FORMATION OF CHEMICALLY ADSORBED FILM
[○ REPRESENTS SiCl 3 HEREIN]
1
POLYMERIZATION USING METALLIC CATALYST
(d)
(e)
TRANS-POLYACETYLENE BOND 3
POLYACENE BOND 5
POLYMERIZATION BY IRRADIATION
1
1

FIG.6

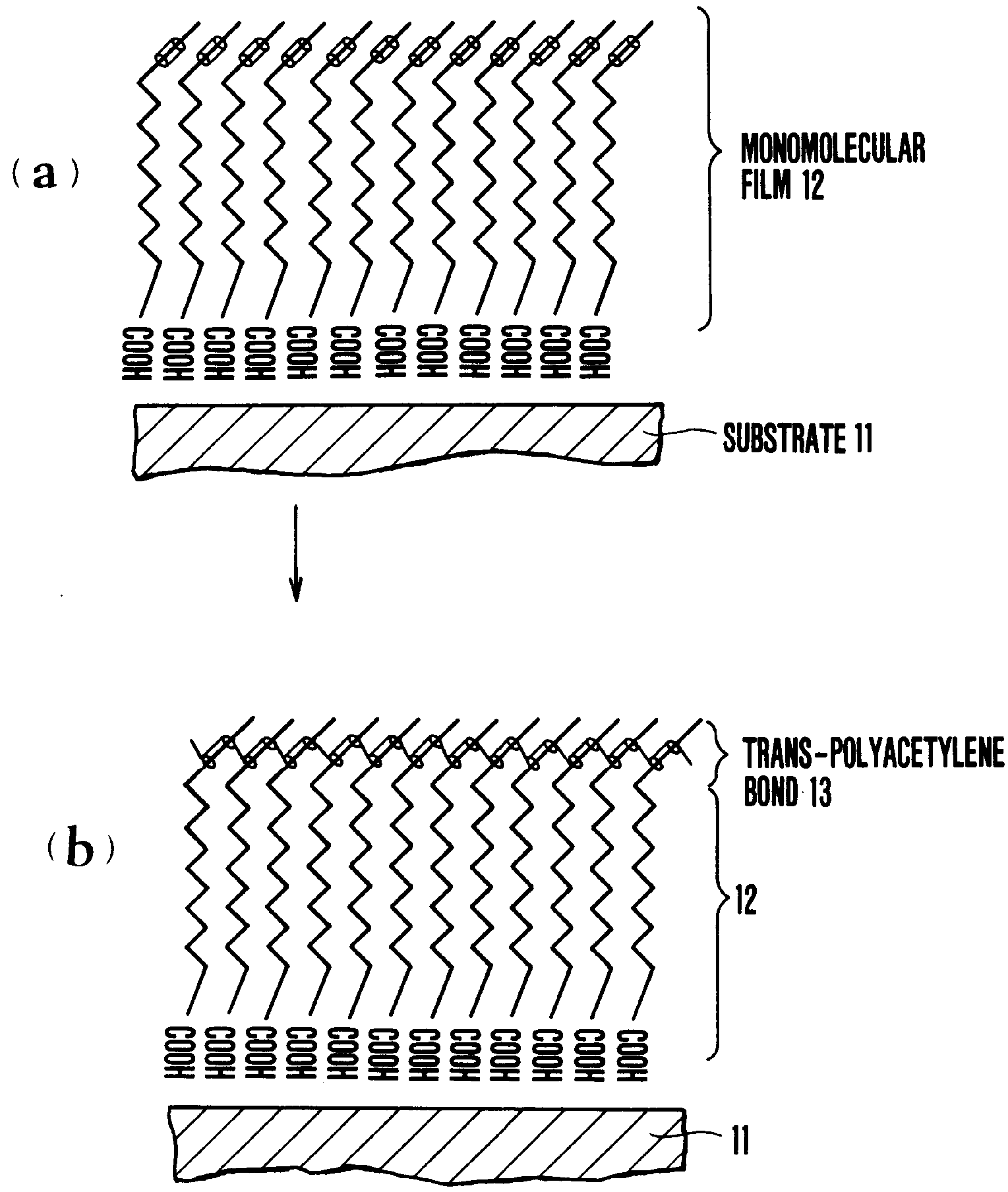
(a)
MONOMOLECULAR FILM 12
COOH
SUBSTRATE 11
(b)
TRANS-POLYACETYLENE BOND 13
12
COOH
11

FIG.7

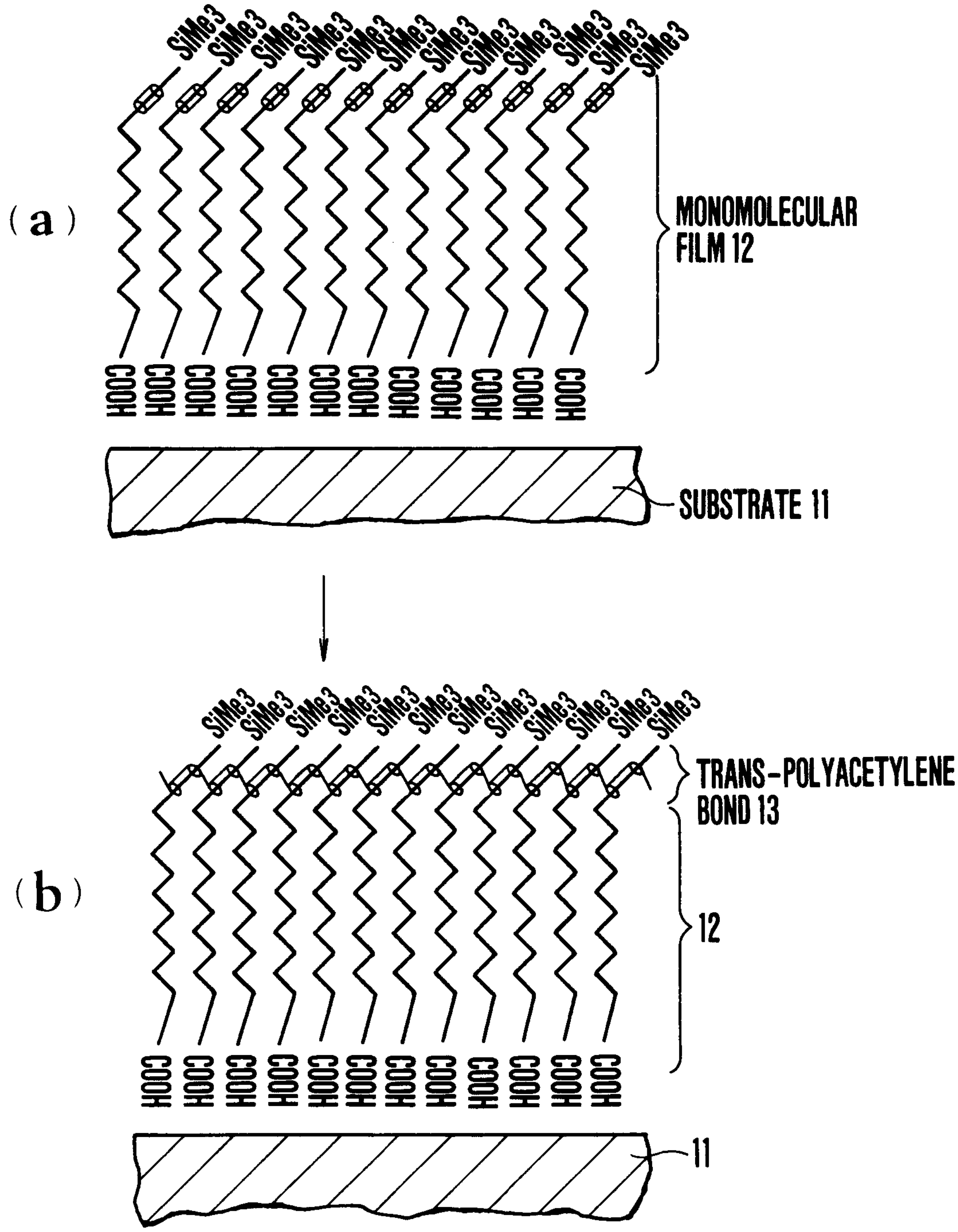
(a)
SiMe3
MONOMOLECULAR FILM 12
COOH
SUBSTRATE 11
(b)
TRANS-POLYACETYLENE BOND 13
12
11

# FIG.8

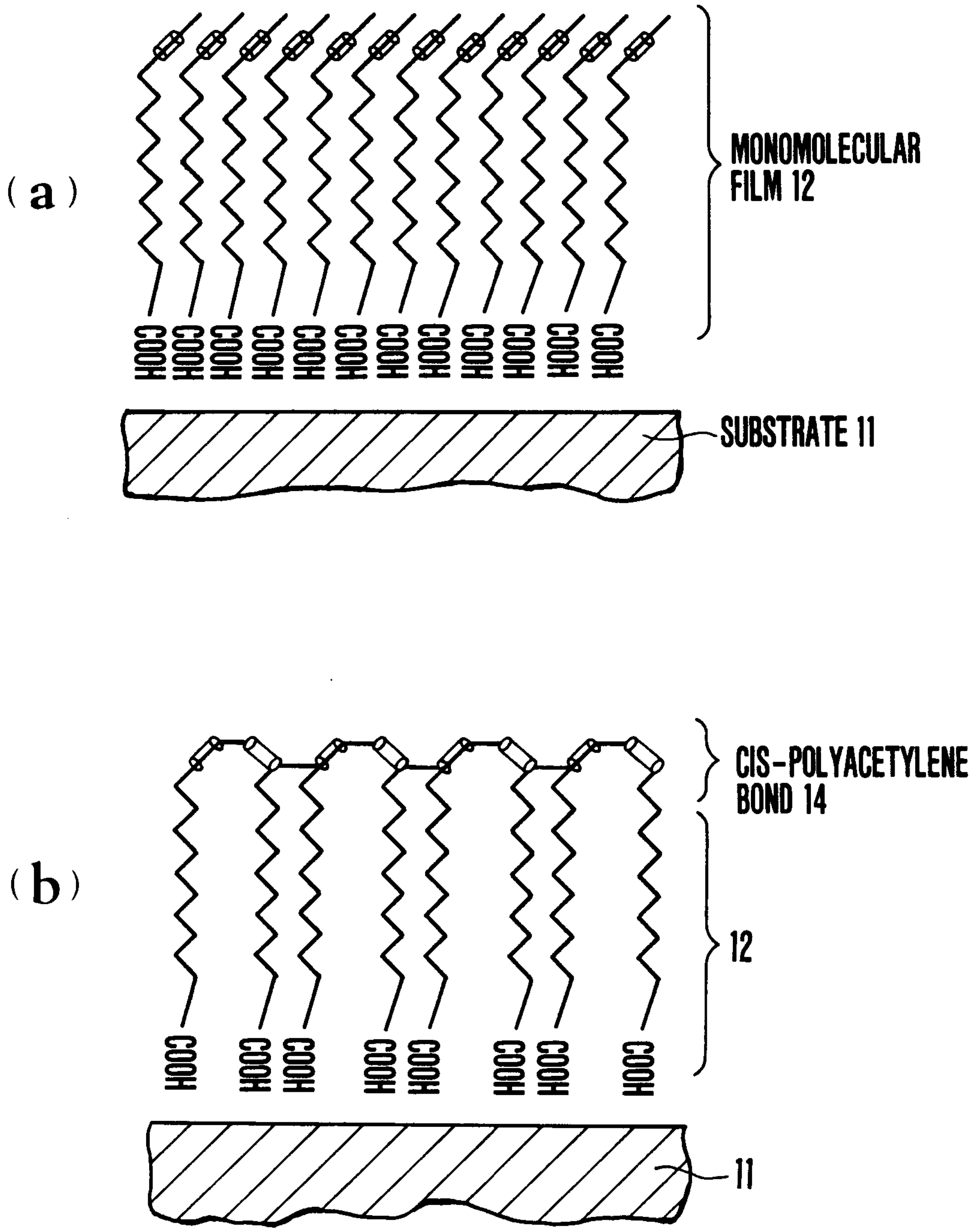
(a)
MONOMOLECULAR FILM 12
COOH
SUBSTRATE 11
(b)
CIS-POLYACETYLENE BOND 14
12
COOH
11

FIG.9

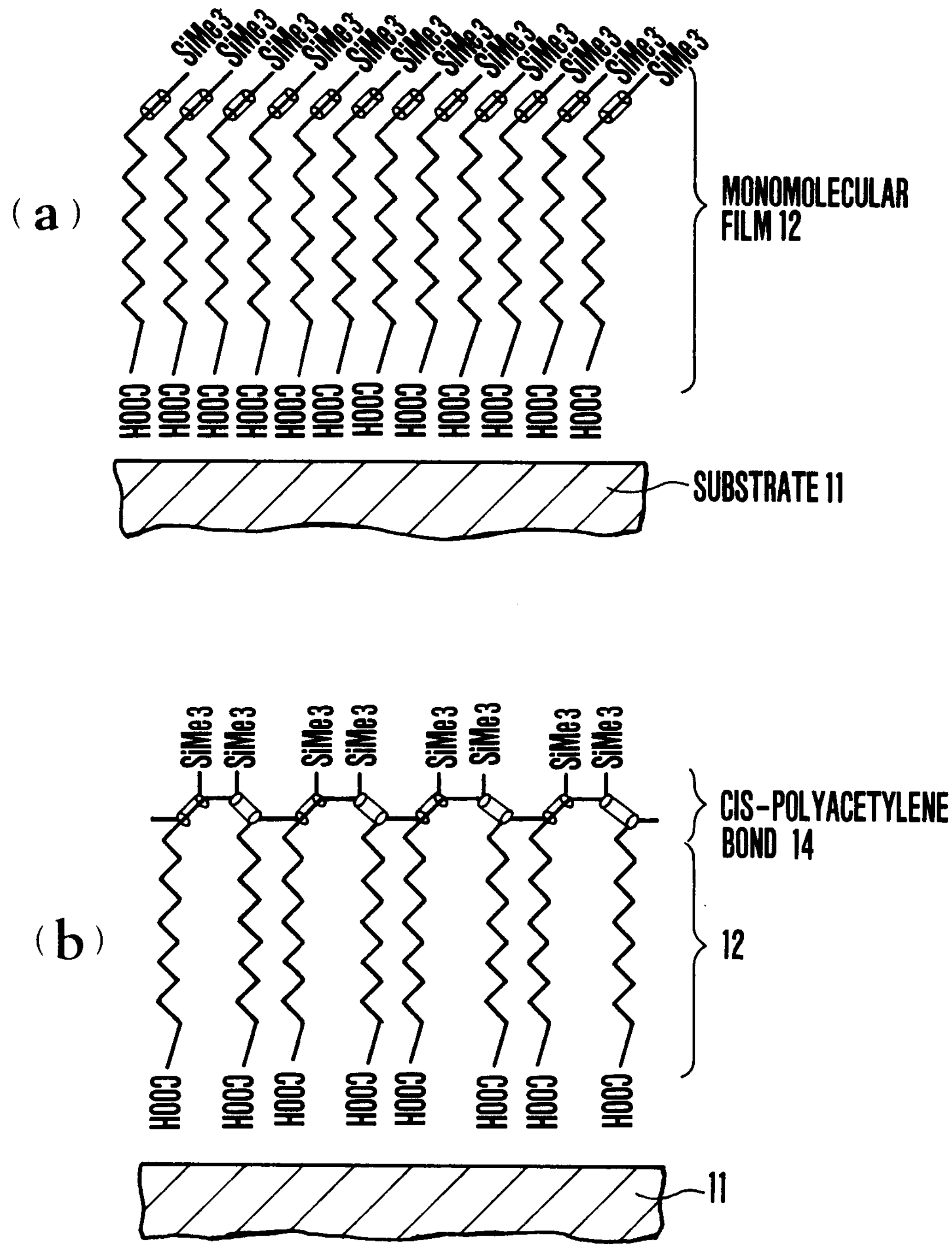
(a)
SiMe3
MONOMOLECULAR FILM 12
COOH
SUBSTRATE 11
(b)
SiMe3
CIS-POLYACETYLENE BOND 14
12
COOH
11

F I G.10

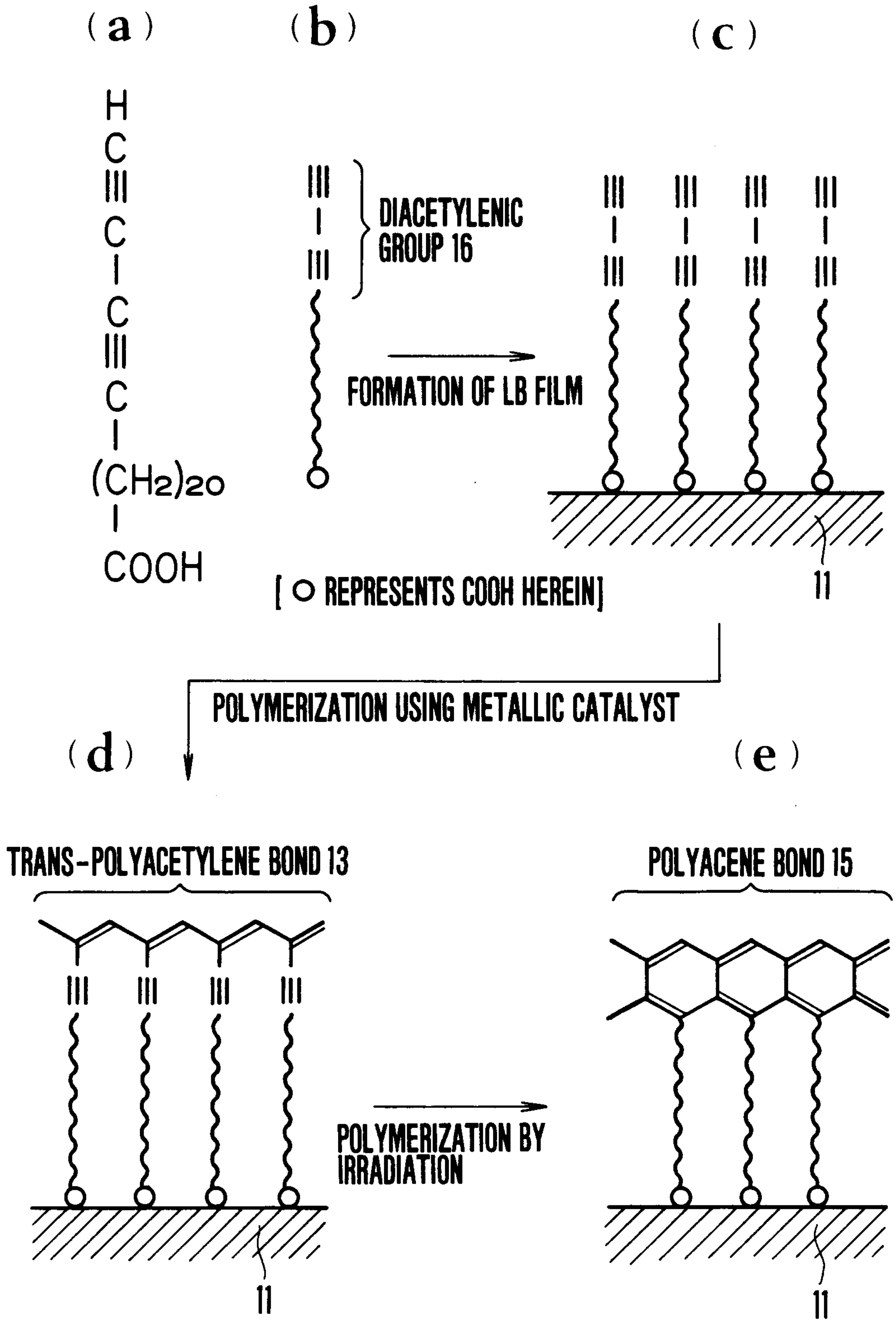
(a)
(b)
(c)
DIACETYLENIC GROUP 16
FORMATION OF LB FILM
[ ○ REPRESENTS COOH HEREIN]
11
POLYMERIZATION USING METALLIC CATALYST
(d)
(e)
TRANS-POLYACETYLENE BOND 13
POLYACENE BOND 15
POLYMERIZATION BY IRRADIATION
11
11